# EUROPEAN PATENT SPECIFICATION

(11) **EP 2 839 374 B1**
(45) Date of publication and mention of the grant of the patent: **13.04.2016**
(21) Application number: 13726859.5
(22) Date of filing: 18.04.2013
(51) Int. Cl.: G06F 11/07, G06F 11/14, G06F 11/20

(54) **INFORMATION PROCESSING DEVICE, INFORMATION PROCESSING METHOD, AND STORAGE MEDIUM STORING PROGRAM FOR EXECUTING INFORMATION PROCESSING METHOD**
DATENVERARBEITUNGSVORRICHTUNG MIT VERFAHREN UND SPEICHERMEDIUM BEINHALTEND DES COMPUTERPROGRAMS ZUR AUSFÜHRUNG DES VERFAHRENS.
DISPOSITIF ET MÉTHODE DE TRAITEMENT DE L'INFORMATION ET SUPPORT MÉMOIRE COMPRENANT LE PROGRAMME D'ORDINATEUR PERMETTANT L'EXÉCUTION DE LADITE MÉTHODE.

(30) Priority: 20.04.2012 JP 2012096801
(43) Date of publication of application: 25.02.2015
(73) Proprietor: Toyota Jidosha Kabushiki Kaisha, Toyota-shi, Aichi-ken, 471-8571 (JP)
(72) Inventor: HIRANO, Kanji, Toyota-shi Aichi-ken, 471-8571 (JP)
(74) Representative: Kuhnen & Wacker
(86) International application number: PCT/IB2013/000717
(87) International publication number: WO 2013/156844

(56) References cited:
- EP-A2- 0 409 604
- US-A- 5 386 544
- US-A1- 2005 228 947
- US-B1- 6 789 214

## Description

### BACKGROUND OF THE INVENTION

### 1. Field of the Invention

The invention relates to an information processing device that includes a plurality of processing units, an information processing method, and a storage medium storing a program for executing the information processing method.

### 2. Description of Related Art

In a related art, there is known an information processing device that includes a plurality of processing units. For example, there are known a multi-core processor in which a plurality of processing units (processor cores, CPU cores) are encapsulated in a single package and then the processor cores are able to execute processes independently in parallel with each other, a multiprocessor in which a program memory or a main memory is provided in each processor, and the like.

Meanwhile, an accurate processing result is required of an information processing device that is used as a control device of, for example, a mobile unit such as a vehicle, a plant, a machining device, various electronic devices, or the like. Therefore, such an information processing device may execute by itself the process of verifying whether software components are normally operating.

With regard to the above, the invention of a multiprocessor system having a plurality of processors that are respectively responsible for assigned controls is disclosed (for example, see Japanese Patent Application Publication No. 2008-305317 (JP 2008-305317 A)). The multiprocessor system includes an abnormality detection unit that detects an abnormality in one specific processor among a plurality of processors and an instruction unit that causes any one of the other processors, other than the one processor, among the plurality of processors to execute the control assigned to the specific processor as a substitute for the one processor on the basis of a result detected by the abnormality detection unit.

In the multiprocessor system described in JP 2008-305317 A, a core incorporated in a watchdog processor detects an abnormality in the other cores through inter-core communication. More specifically, the watchdog processor monitors whether each core and a program that is processed by the core are normally operating by periodically checking the other cores through communication.

In addition, in the multiprocessor system described in JP 2008-305317 A, when there occurs an abnormality in Core 1 to which vehicle control that is the highest-priority control is assigned, the watchdog processor, upon detection of the abnormality, changes the configuration of an information control OS by rewriting the registry or the setting file such that the information control OS that is operating in the three Cores 1, 2, 3 is caused to operate in the two Cores 2, 3 of them. The watchdog processor replaces the information control OS, which is the OS of Core 1, with vehicle control OS in order to cause Core 1 to continue processing a vehicle control application that has been processed by the core in which an abnormality has been detected.

However, in the multiprocessor system according to the related art, the other cores are caused to process all the processing, which the core having an abnormality has been processing, so a switching processing load due to, for example, replacement of the OS, and the like, is large. In addition, when the processing, which the core having an abnormality has been processing, includes low-priority one, the low-priority processing is also processed by the other cores, so the processing load increases, and originally necessary high-priority processing may delay. As a result of these, the efficiency of processing at the time of occurrence of an abnormality may decrease.

From US 2005/228947 A1, a technique is known which observes the status on the server side from the storage device side, and controls the processing priority in accordance with the server status. The storage device is utilized by numerous servers. Two server form a failover cluster. A status detection part judges whether or not an event observed from one server corresponds to a specified event. In cases where such a specified event is observed, the status detection part detects the occurrence of failover. In accordance with the detection of the occurrence of failover, the priority control part sets the processing priority of the failover destination server at a priority that is higher than the ordinary processing priority. When the preset failover time has elapsed, the priority during failover is returned to the ordinary priority.

### SUMMARY OF THE INVENTION

The invention provides an information processing device and an information processing method by which, when any one of processing units has an abnormality, another one of the processing units is able to quickly execute necessary processing as a substitute for the any one of the processing units having an abnormality.

A first aspect of the invention provides an information processing device. The information processing device includes: a plurality of processing units configured to execute software components each having a priority level; an abnormality determination unit configured to determine whether any one of the plurality of processing units has an abnormality; and a changing unit configured to, when the abnormality determination unit has determined that any one of the processing units has an abnormality, execute control such that the processing unit not determined to have an abnormality processes the software component supposed to be executed by the processing unit determined to have an abnormality, the changing unit being configured to process the software component having the priority level higher than or equal to a reference level among the software components supposed to be executed by the processing unit determined to have an abnormality.

In the above aspect, the information processing device may further include a nonvolatile storage unit configured to hold pieces of information, which are loaded by the plurality of processing units at the time of start-up and include abnormality information that allows the processing unit, determined to have an abnormality by the abnormality determination unit, to be identified and memory protection information that defines memory areas that are respectively used by the plurality of processing units, wherein, when the abnormality determination unit has determined that any one of the processing units has an abnormality, the changing unit may be configured to rewrite the abnormality information on the basis of the determination result, and may be configured to rewrite the memory protection information such that the memory area corresponding to the software component having the priority level higher than or equal to the reference level among the software components supposed to be executed by the processing unit, determined to have an abnormality, is assigned to the processing unit that processes the software component supposed to be executed by the processing unit, determined to have an abnormality.

In the above aspect, the changing unit may be included in each of the processing units, and the abnormality determination unit may be configured to, when the abnormality determination unit has determined that any one of the processing units has an abnormality, provide notification that the any one of the processing units has an abnormality to the changing unit of the processing unit having no abnormality.

In the above aspect, the changing unit may be included in the abnormality determination unit, and the abnormality determination unit may be configured to, when the abnormality determination unit has determined that any one of the processing units has an abnormality, rewrite the abnormality information and the memory protection information.

In the above aspect, when the abnormality determination unit has determined that any one of the processing units has an abnormality, the information processing device may be configured to be restarted after the changing unit has rewritten the abnormality information and the memory protection information.

In the above aspect, the software component having the priority level higher than or equal to the reference level may include a predetermined software component that is shared among the plurality of processing units.

Another aspect of the invention provides an information processing method. The information processing method includes: determining whether any one of a plurality of processing units, which execute software components each having a priority level, has an abnormality; and, when it is determined that any one of the processing units has an abnormality, processing the software component having the priority level higher or equal than a reference level among the software components supposed to be executed by the processing unit determined to have an abnormality with the use of the processing unit not determined to have an abnormality.

Further another aspect of the invention provides a non-transitory computer-readable storage medium storing a program for causing a computer to execute a method. The method includes: determining whether any one of a plurality of processing units, which execute software components each having a priority level, has an abnormality; and, when it is determined that any one of the processing units has an abnormality, processing the software component having the priority level higher or equal than a reference level among the software components supposed to be executed by the processing unit determined to have an abnormality with the use of the processing unit not determined to have an abnormality.

According to the above aspects, when any one of the processing units has an abnormality, it is possible to quickly cause another one of the processing units to process necessary processing as a substitute for the any one of the processing units having an abnormality.

According to the above aspects of the invention, it is possible to provide the information processing device, the information processing method and the program by which, when any one of the processing units has an abnormality, another one of the processing units is able to quickly execute necessary processing as a substitute for the any one of the processing units having an abnormality.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a system configuration example of an information processing device according to an embodiment of the invention;
FIG 2 is an example of a flowchart that shows flow of characteristic processes that are executed by the information processing device;
FIG 3 is an example of an abnormality information table and a memory map table that, when there occurs an abnormality in one CPU, have been rewritten by the other CPU;
FIG 4 is a timing chart that shows an example in which the operating state of each CPU changes in the case where there occurs an abnormality in one of the CPUs through execution of the flowchart shown in FIG 2;
FIG 5 is a view that illustrates the logical configuration of the information processing device for each of a software level and a hardware level;
FIG 6 is an example of initial information that is stored in a nonvolatile memory in the case where the information processing device has the logical configuration illustrated in FIG. 5; and
FIG 7 is an example of data on the nonvolatile memory that, when there occurs an abnormality in one CPU that is executing an ADC physical device, have been rewritten by the other CPU.

### DETAILED DESCRIPTION OF EMBODIMENTS

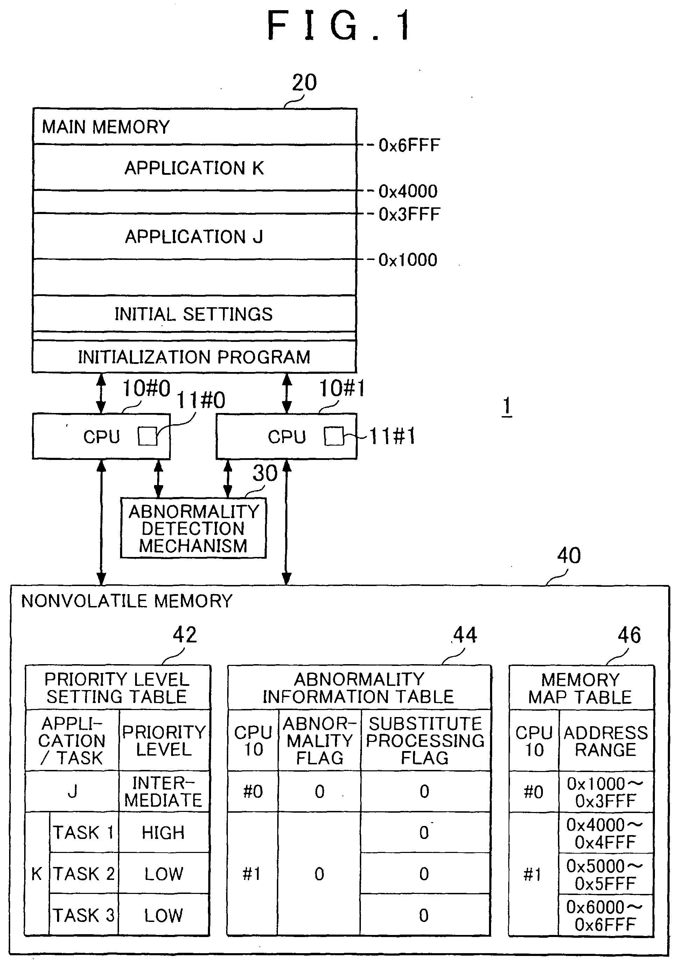

FIG 1 is a system configuration example of an information processing device 1 according to an embodiment of the invention. The information processing device 1 is, for example, a multi-core processor, and includes CPUs (cores) 10#0, 10#1, a main memory 20, an abnormality detection mechanism 30 and a nonvolatile memory 40. Here, the reason why the number of the CPUs is two is just an example, and the number of the CPUs just needs to be two or more.

The information processing device 1 may include, in addition to the above-described components, a basic input/output system (BIOS) ROM, a direct memory access (DMA) controller, an interrupt controller, a peripheral I/O, and the like, that are generally included in a microcomputer.

The CPUs 10#0, 10#1 each include, for example, a processing unit, an internal memory, a program counter, and the like. The processing unit includes an instruction fetch unit, an arithmetic logic unit (ALU), a multiplier (MUL), a divider (DIV), a load store unit (LSU), and others. The internal memory includes an internal register, a cache memory, and the like. The CPUs 10#0, 10#1 respectively include changing units 11#0, 11#1.

The main memory 20 is a ROM. The CPUs 10#0, 10#1 execute programs stored in the main memory 20. Not only an area (0x1000 to 0x3FFFF) in which an application program J (hereinafter, referred to as application J) that is supposed to be executed by the CPU 10#0 is stored and an area (0x4000 to 0x6FFFF) in which an application program K (hereinafter, referred to as application K) that is supposed to be executed by the CPU 10#1 is stored but also an initial setting storage area, an initialization program storage area, and the like, are set in the main memory 20.

These area settings are written in the nonvolatile memory 40 as will be described later. Each CPU loads these area settings and stores the settings in the internal register at the time of, for example, start-up of the information processing device 1, and incorporates the area settings into operations.

The main memory 20 may be a nonvolatile memory or may be a random access memory (RAM) onto which a program is expanded (loaded) from the ROM or the nonvolatile memory.

The abnormality detection mechanism 30 is, for example, a microcomputer similar to the CPUs 10#0, 10#1. The abnormality detection mechanism 30 determines whether any one of the CPUs 10#0, 10#1 has an abnormality by, for example, periodically checking the CPUs 10#0, 10#1 through communication. When the abnormality detection mechanism 30 determines that any one of the CPUs has an abnormality, the abnormality detection mechanism 30 provides notification of that effect to the CPU (changing unit) having no abnormality. An abnormality detection method used in the abnormality detection mechanism 30 is not specifically limited, and any method may be used. The abnormality detection mechanism 30 may be one of functions of the CPUs 10#0, 10#1.

The nonvolatile memory 40 is, for example, an electrically erasable and programmable read only memory (EEPROM), a flash memory, a hard disk drive (HDD), or the like. The nonvolatile memory 40 stores a priority level setting table 42, an abnormality information table 44 and a memory map table 46 that are pieces of information that are consulted by the CPUs 10#0, 10#1 at the time of start-up.

The priority levels of application programs and tasks that are executed by the CPUs 10#0, 10#1 are set in the priority level setting table 42. In the present embodiment, each application program may include a plurality of tasks. The priority level setting table 42 is preset at the time of, for example, shipment of the information processing device 1, and is not supposed to be rewritten by the CPUs 10#0, 10#1 (therefore, may be stored in the ROM).

The abnormality information table 44 is information that includes an abnormality flag that indicates whether each CPU has an abnormality and a substitute processing flag that indicates whether substitute processing should be executed. Each of these flags is, for example, configured such that "0" (Lo) indicates a state where there is no abnormality or substitute processing should not be executed and "1" (Hi) indicates a state where there is an abnormality or substitute processing should be executed. The abnormality information table 44 is, for example, rewritten by the changing units 11#0, 11#1 of the CPUs 10#0, 10#1 as will be described later.

The memory map table 46 is information that indicates an accessible address range of the main memory 20 from each of the CPUs. Each CPU consults the memory map table 46 at the time of start-up, or the like, and copies its accessible address range of the main memory 20 to the corresponding internal register, or the like. Memory protection in the information processing device 1 is thus achieved. The memory map table 46 is, for example, rewritten by the changing units 11#0, 11#1 of the CPUs 10#0, 10#1 as will be described later.

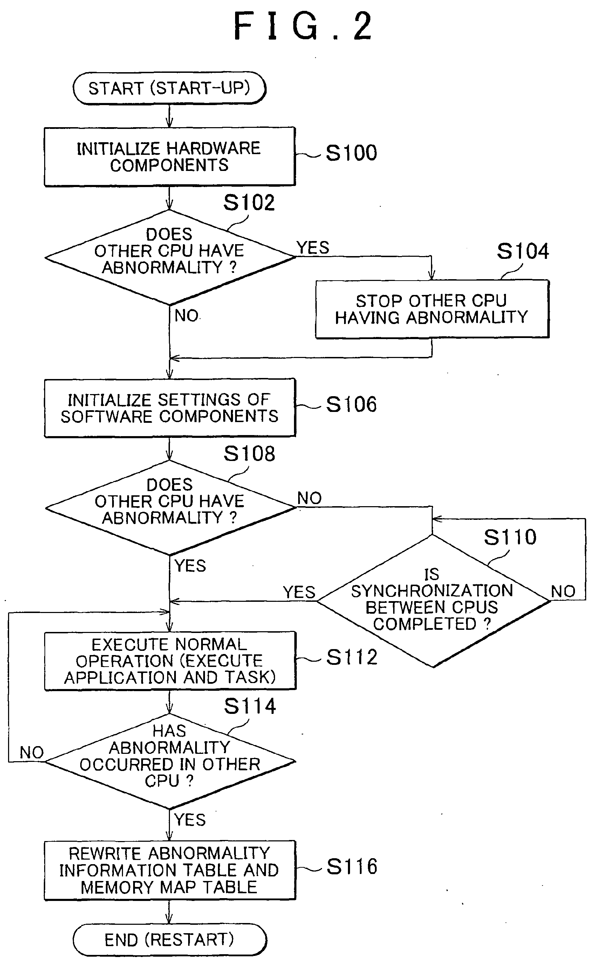

Hereinafter, the flow of processes that are executed by the information processing device 1 according to the present embodiment will be described. FIG 2 is an example of a flowchart that shows the flow of processes that are executed by the information processing device 1 according to the present embodiment. The flowchart is started at timing at which the information processing device 1 starts up, and is executed by each CPU.

First, each CPU initializes hardware components (S100). Specifically, each CPU, for example, resets a flip-flop and a memory.

Subsequently, each CPU consults the abnormality information table 44, and determines whether the other CPU has an abnormality (S102).

When the other CPU has an abnormality, the CPU having no abnormality stops the other CPU having an abnormality (S104).

After that, the CPU having no abnormality initializes the settings of software components (S106). Specifically, the CPU having no abnormality executes, for example, the process of loading the memory map table 46 and then writing the memory map table 46 in the internal register.

Then, the CPU having no abnormality determines again whether the other CPU has an abnormality (S108). When the other CPU has no abnormality, the CPU having no abnormality waits until synchronization between the CPUs is completed (S110). Completion of synchronization between the CPUs is confirmed by, for example, checking the flags each other.

The CPU having no abnormality proceeds with the process to normal operation, and executes application programs or tasks (S112).

During normal operation, the changing unit included in the CPU having no abnormality determines whether the abnormality detection mechanism 30 has determined that the other CPU has an abnormality (S114).

When the abnormality detection mechanism 30 has determined that the other CPU has an abnormality, the changing unit included in the CPU having no abnormality rewrites the abnormality information table 44 and the memory map table 46 (S116). After that, the information processing device 1 is restarted. After that, the information processing device 1 starts up, and executes the processes from S100.

In the process of S116, the changing unit included in the CPU having no abnormality rewrites the abnormality information table 44 and the memory map table 46 on the assumption that the changing unit processes the application program or task, which is supposed to be executed by the CPU determined to have an abnormality and which has the priority level higher than or equal to a reference level (for example, higher than or equal to "HIGH") after the next start-up.

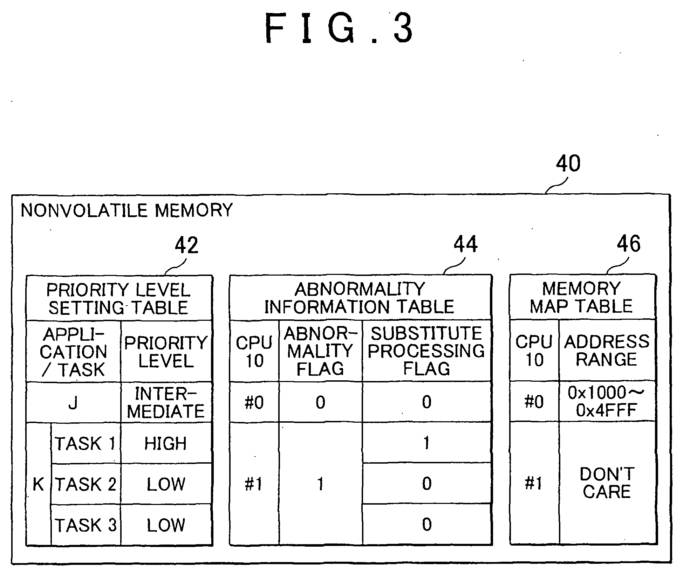

FIG. 3 is an example of the abnormality information table 44 and the memory map table 46 that have been rewritten by the changing unit 11#0 of the CPU 10#0 in the case where the CPU 10#1 has an abnormality.

As shown in the drawing, the changing unit 11#0 rewrites the abnormality flag of the CPU 10#1 to "1". The changing unit 11#0 processes only Task 1 having the priority level "HIGH" among the application programs or tasks that are supposed to be executed by the CPU 10#1, so the changing unit 11#0 rewrites the substitute processing flag of Task 1 to "1". Furthermore, the changing unit 11#0 rewrites the address range of the CPU 10#0 from the range 0x1000 to 0x3FFF to the range 0x1000 to 0x4FFF that includes the address range 0x4000 to 0x4FFF corresponding to Task 1 in order to allow the CPU 10#0 to access the memory area corresponding to Task 1.

By rewriting the abnormality information table 44 and the memory map table 46 in this way, the CPU 10#0 is able to recognize that the CPU 10#1 has an abnormality and Task 1 needs to be processed as a substitute for the CPU 10#1 when the information processing device 1 is started up next time. The memory map table 46 already includes the address range for substitute processing, so the CPU 10#0 is able to access the address range required for substitute processing. As a result, the information processing device 1 is able to quickly execute required substitute processing while maintaining appropriate memory protection.

In the present embodiment, the number of the CPUs is two, so the CPU 10#0 is able to automatically recognize that it should execute substitute processing. In the case where three or more CPUs are provided, for example, a flag that indicates that any one of the CPUs 10#1, 10#2, ..., should execute substitute processing when the CPU 10#0 has an abnormality may be added to the abnormality information table 44, or the like. As for a rule for selecting the CPU that executes substitute processing, for example, selection may be made on the basis of, for example, the priority level of the application program or task to be execute or selection may be made in consideration of, for example, processing capacity (processing load) required to execute the application.

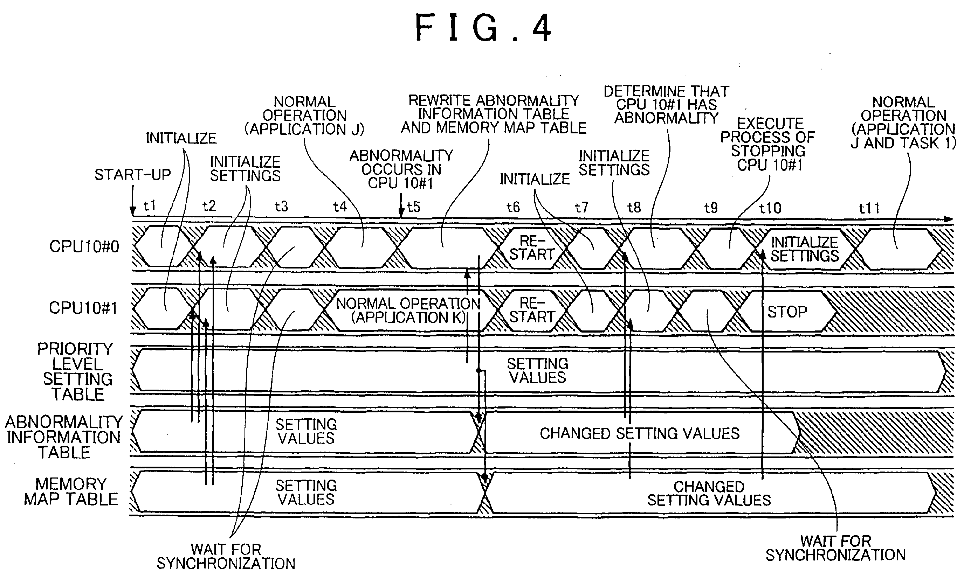

FIG 4 is a timing chart that shows an example in which the operation state of each CPU changes in the case where there occurs an abnormality in one of the CPUs through execution of the flowchart shown in FIG 2.

From time t1, the CPUs 10#0, 10#1 initialize hardware components. After that, the CPUs 10#0, 10#1 consult the abnormality information table 44. Because there is no abnormality at this time point, no CPU is stopped. From time t2, the CPUs 10#0, 10#1 initialize settings of software components.

From time t3, the CPUs 10#0, 10#1 wait until mutual synchronization is completed. After that, from time t4, the CPUs 10#0, 10#1 execute normal operation.

Here, when there occurs an abnormality in the CPU 10#1 at time t5, the abnormality detection mechanism 30 provides notification of that effect to the changing unit 11#0 of the CPU 10#0. After that, the changing unit 11#0 consults the priority level setting table 42 and recognizes the application program or task required for substitute processing. Then, the changing unit 11#0 rewrites the abnormality information table 44 and the memory map table 46.

After completion of rewriting, at time t6, the information processing device 1 is restarted. Subsequently, from time t7, the CPUs 10#0, 10#1 initialize the hardware components. At time t8 thereafter, the CPU 10#0 consults the abnormality information table 44. Then, the CPU 10#0 determines that the CPU 10#1 has an abnormality. Accordingly, the CPU 10#0 executes the process of stopping the CPU 10#1 from time t9.

After that, from time t10, the CPU 10#0 loads the memory map table 46 and initializes the settings of the software components, and at time t11, proceeds with the process to normal operation (executes Application J and also executes Task 1 as a substitute for the CPU 10#1).

The substitute processing that is executed by the information processing device 1 is not limited to an application program or task, and is also applicable to a shared software component, such as a device driver.

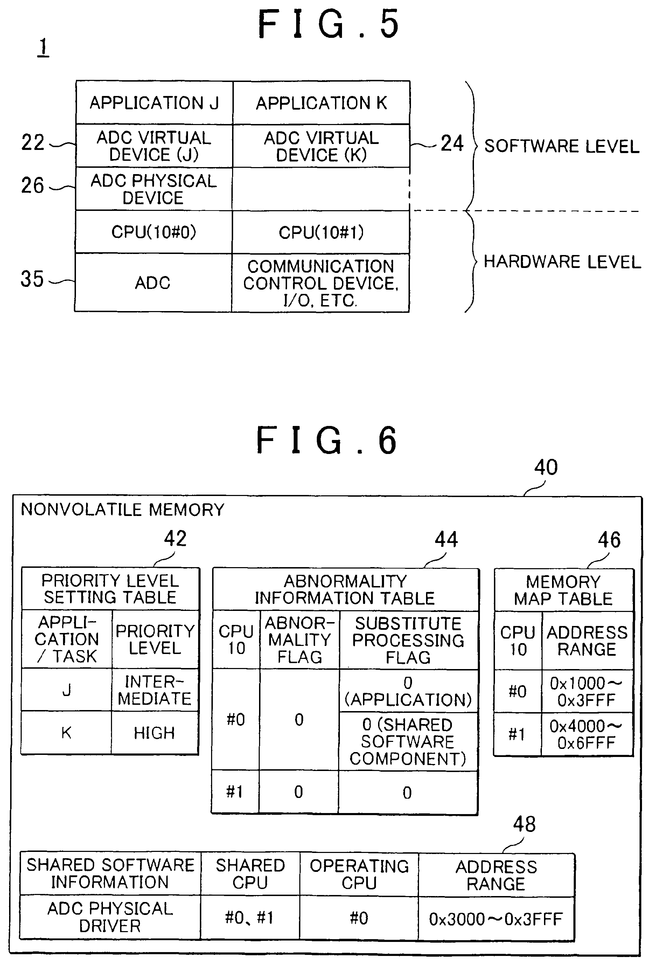

FIG 5 is a view that illustrates the logical configuration of the information processing device 1 for each of a software level and a hardware level.

When the information processing device 1, for example, includes an AD converter (ADC) 35 as a hardware configuration, Application J that is executed by the CPU 10#0, for example, accesses an ADC physical device 26 via an ADC virtual device (J) 22, and the ADC physical device 26 controls the ADC 35.

In this case, the ADC physical device 26 does not operate for each of the CPUs, and is presumably shared among the CPUs. That is, Application K that is executed by the CPU 10#1 accesses the ADC physical device 26 via an ADC virtual device (K) 24 (for example, communication is carried out between the CPUs), and the ADC physical device 26 controls the ADC 35.

FIG 6 is an example of initial information that is stored in the nonvolatile memory 40 in the case where the information processing device 1 has the logical configuration illustrated in FIG 5. In this case, the nonvolatile memory 40 stores shared software information 48 in addition to the priority level setting table 42, the abnormality information table 44 and the memory map table 46.

A shared software component, such as the ADC physical device 26, may not be able to be used by the other CPU when there occurs an abnormality in the CPU that is executing the shared software. Thus, the information processing device 1 handles such a shared software component as in the case of the application program or task having the priority level "HIGH" in the above-described embodiment.

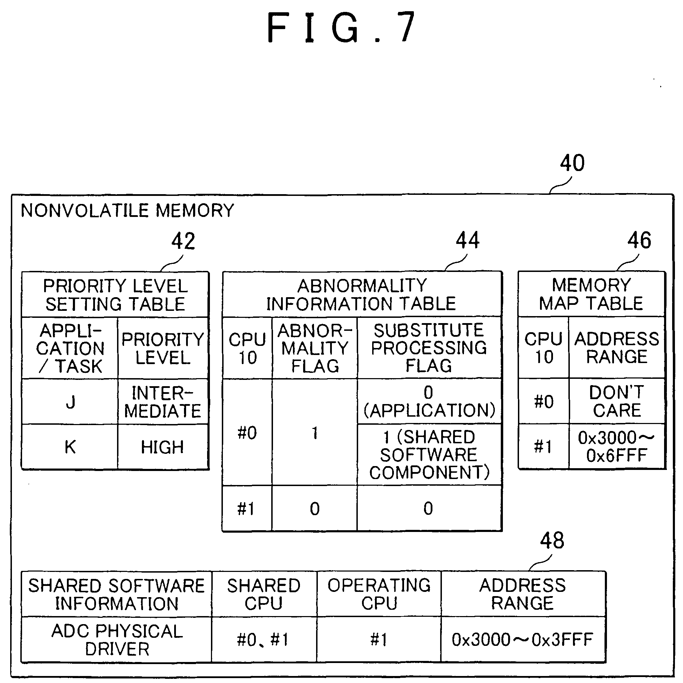

FIG 7 is an example of data on the nonvolatile memory 40 rewritten by the changing unit 11#1 of the CPU 10#1 in the case where there occurs an abnormality in the CPU 10#0 that is executing the ADC physical device 26. In this case, because Application J that has been executed by the CPU 10#0 has the priority level "INTERMEDIATE", substitute processing is not executed; however, substitute processing is executed for the ADC physical device 26 that is the shared software component.

As shown in FIG 7, after the information processing device 1 is restarted by rewriting the abnormality information table 44, the memory map table 46 and the shared software information 48, the CPU 10#1 is able to quickly operate the ADC physical device 26.

With the above-described information processing device 1 according to the invention, the CPU, upon reception of notification that there occurs an abnormality in the other CPU, rewrites the abnormality information table 44 and the memory map table 46 while consulting the priority level of the application program or task, so it is possible to quickly execute necessary substitute processing while maintaining appropriate memory protection.

For a shared software component that is shared between the CPUs, it is possible to reduce the possibility that the shared software component required to operate each CPU stops by handling the shared software component as having a high priority level.

A mode for carrying out the invention is described above with reference to the embodiment; however, the invention is not limited to the above embodiment, and various modifications and replacements may be added without departing from the scope of the invention.

For example, the abnormality information table 44 and the memory map table 46 are rewritten by the changing unit 11#0 or the changing unit 11#1 of the CPU that has received notification that there occurs an abnormality in the other CPU; instead, the changing units 11#0, 11#1 may be included in the abnormality detection mechanism 30. That is, the changing unit included in the abnormality detection mechanism 30 may carry out rewriting.

The information processing device 1 is not only applicable to the multi-core processor but also applicable to any computer that includes a plurality of processing units (CPUs, or the like), such as a multiprocessor.

## Claims

1. An information processing device comprising:
a plurality of processing units (10#0, 10#1) configured to execute software components each having a priority level;
an abnormality determination unit (30) configured to determine whether any one of the plurality of processing units (10#0, 10#1) has an abnormality; and
a changing unit (11#0, 11#1) configured to, when the abnormality determination unit (30) has determined that any one of the processing units has an abnormality, execute control such that the processing unit not determined to have an abnormality processes the software components supposed to be executed by the processing unit determined to have an abnormality, the changing unit (11#0, 11#1) being configured to process the software component having the priority level higher than or equal to a reference level among the software components supposed to be executed by the processing unit determined to have an abnormality.

2. The information processing device according to claim 1, further comprising:
a nonvolatile storage unit (40) configured to hold pieces of information, which are loaded by the plurality of processing units (10#0, 10#1) at the time of start-up and include abnormality information that allows the processing unit, determined to have an abnormality by the abnormality determination unit (30), to be identified and memory protection information that defines memory areas that are respectively used by the plurality of processing units (10#0, 10#1), wherein
when the abnormality determination unit (30) has determined that any one of the processing units has an abnormality, the changing unit (11#0, 11#1) is configured to rewrite the abnormality information on the basis of the determination result, and is configured to rewrite the memory protection information such that the memory area corresponding to the software component having the priority level higher than or equal to the reference level among the software components supposed to be executed by the processing unit, determined to have an abnormality, is assigned to the processing unit that processes the software component supposed to be executed by the processing unit, determined to have an abnormality.

3. The information processing device according to claim 2, wherein
the changing unit (11#0, 11#1) is included in each of the processing units, and the abnormality determination unit (30) is configured to, when the abnormality determination unit (30) has determined that any one of the processing units has an abnormality, provide notification that the any one of the processing units has an abnormality to the changing unit (11#0, 11#1) of the processing unit having no abnormality.

4. The information processing device according to claim 2, wherein
the changing unit (11#0, 11#1) is included in the abnormality determination unit (30), and the abnormality determination unit (30) is configured to, when the abnormality determination unit (30) has determined that any one of the processing units has an abnormality, rewrite the abnormality information and the memory protection information.

5. The information processing device according to any one of claims 2 to 4, wherein
when the abnormality determination unit (30) has determined that any one of the processing units has an abnormality, the information processing device is configured to be restarted after the changing unit (11#0, 11#1) has rewritten the abnormality information and the memory protection information.

6. The information processing device according to any one of claims 1 to 5, wherein
the software component having the priority level higher than or equal to the reference level includes a predetermined software component that is shared among the plurality ofprocessing units (10#0, 10#1).

7. An information processing method comprising:
determining whether any one of a plurality of processing units (10#0, 10#1), which execute software components each having a priority level, has an abnormality; and
when it is determined that any one of the processing units has an abnormality, processing the software component having the priority level higher or equal than a reference level among the software components supposed to be executed by the processing unit determined to have an abnormality with the use of the processing unit not determined to have an abnormality.

8. A non-transitory computer-readable storage medium storing a program for causing a computer to execute a method, the method comprising:
determining whether any one of a plurality of processing units (10#0, 10#1), which execute software components each having a priority level, has an abnormality; and
when it is determined that any one of the processing units has an abnormality, processing the software component having the priority level higher or equal than a reference level among the software components supposed to be executed by the processing unit determined to have an abnormality with the use of the processing unit not determined to have an abnormality.

## Patentansprüche

1. Informationsverarbeitungsvorrichtung, aufweisend:
eine Mehrzahl an Verarbeitungseinheiten (10#0, 10#1), die darauf ausgelegt sind, Softwarekomponenten auszuführen, die jeweils einen Prioritätsgrad aufweisen;
eine Störungsbestimmungseinheit (30), die so konfiguriert ist, dass sie bestimmt, ob eine aus der Mehrzahl an Verarbeitungseinheiten (10#0, 10#1) eine Störung aufweist; und
eine Änderungseinheit (11#0, 11#1), die so konfiguriert ist, dass sie, wenn die Störungsbestimmungseinheit (30) bestimmt hat, dass eine der Verarbeitungseinheiten eine Störung aufweist, eine Steuerung ausführt, so dass die Verarbeitungseinheit, bei der nicht bestimmt wird, dass sie eine Störung aufweist, die Softwarekomponenten verarbeitet, die durch die Verarbeitungseinheit ausgeführt werden sollen, von der bestimmt wurde, dass sie eine Störung aufweist, wobei die Änderungseinheit (11#0, 11#1) so konfiguriert ist, dass sie von den Softwarekomponenten, die durch die Verarbeitungseinheit ausgeführt werden sollen, von der bestimmt wurde, dass sie eine Störung aufweist, diejenige Softwarekomponente verarbeitet, die einen Prioritätsgrad aufweist, der größer oder gleich einem Referenzgrad ist.

2. Informationsverarbeitungsvorrichtung nach Anspruch 1, ferner aufweisend:
eine nichtflüchtige Speichereinheit (40), die so konfiguriert ist, dass sie Informationen, die durch die Mehrzahl an Verarbeitungseinheiten (10#0, 10#1) zum Zeitpunkt des Startens geladen werden und die Störungsinformationen beinhalten, die es der Verarbeitungseinheit, von der durch die Störungsbestimmungseinheit (30) bestimmt wurde, dass sie eine Störung aufweist, ermöglichen, identifiziert zu werden, und Speicherschutzinformationen, die Speicherbereiche definieren, die jeweils von der Mehrzahl an Verarbeitungseinheiten (10#0, 10#1) verwendet werden, speichert, wobei
wenn die Störungsbestimmungseinheit (30) bestimmt hat, dass eine der Verarbeitungseinheiten eine Störung aufweist, die Änderungseinheit (11#0, 11#1) so konfiguriert ist, dass sie die Störungsinformationen auf der Grundlage des Bestimmungsergebnisses neu schreibt, und so konfiguriert ist, dass sie die Speicherschutzinformationen neu schreibt, so dass der Speicherbereich, der von den Softwarekomponenten, die durch die Verarbeitungseinheit ausgeführt werden sollen, von der bestimmt wurde, dass sie eine Störung aufweist, der Softwarekomponente mit dem Prioritätsgrad, der größer oder gleich dem Referenzgrad ist, entspricht, der Verarbeitungseinheit zugeordnet wird, die die Softwarekomponente verarbeitet, die durch die Verarbeitungseinheit ausgeführt werden soll, von der bestimmt wurde, dass sie eine Störung aufweist.

3. Informationsverarbeitungsvorrichtung nach Anspruch 2, wobei die Änderungseinheit (11#0, 11#1) in jeder der Verarbeitungseinheiten enthalten ist und die Störungsbestimmungseinheit (30) so konfiguriert ist, dass sie, wenn die Störungsbestimmungseinheit (30) bestimmt hat, dass eine der Verarbeitungseinheiten eine Störung aufweist, eine Benachrichtigung an die Änderungseinheit (11#0, 11#1) der Verarbeitungseinheit, die keine Störung aufweist, ausgibt, dass die eine der Verarbeitungseinheiten eine Störung aufweist.

4. Informationsverarbeitungsvorrichtung nach Anspruch 2, wobei die Änderungseinheit (11#0, 11#1) in der Störungsbestimmungseinheit (30) enthalten ist, und die Störungsbestimmungseinheit (30) so konfiguriert ist, dass sie die Störungsinformationen und die Speicherschutzinformationen neu schreibt, wenn die Störungsbestimmungseinheit (30) bestimmt hat, dass eine der Verarbeitungseinheiten eine Störung aufweist.

5. Informationsverarbeitungsvorrichtung nach einem der Ansprüche 2 bis 4, wobei wenn die Störungsbestimmungseinheit (30) bestimmt hat, dass eine der Verarbeitungseinheiten eine Störung aufweist, die Informationsverarbeitungsvorrichtung so konfiguriert ist, dass sie neu gestartet wird, nachdem die Änderungseinheit (11#0, 11#1) die Störungsinformationen und die Speicherschutzinformationen neu geschrieben hat.

6. Informationsverarbeitungsvorrichtung nach einem der Ansprüche 1 bis 5, wobei die Softwarekomponente, die den Prioritätsgrad aufweist, der größer oder gleich dem Referenzgrad ist, eine vorgegebene Softwarekomponente beinhaltet, die von der Mehrzahl an Verarbeitungseinheiten (10#9, 10#1) geteilt wird.

7. Informationsverarbeitungsverfahren, aufweisend:
Bestimmen, ob eine von einer Mehrzahl an Verarbeitungseinheiten (10#0, 10#1), die Softwarebestandteile ausführen, die jeweils einen Prioritätsgrad aufweisen, eine Störung aufweist; und
wenn bestimmt wird, dass eine der Verarbeitungseinheiten eine Störung aufweist, Verarbeiten der Softwarekomponente, die den Prioritätsgrad aufweist, der größer oder gleich einem Referenzgrad, von den Softwarekomponenten, die von der Verarbeitungseinheit ausgeführt werden sollen, von der bestimmt wurde, dass sie eine Störung aufweist, unter Verwendung der Verarbeitungseinheit, von der nicht bestimmt wurde, dass sie eine Störung aufweist.

8. Nichtflüchtiges, computerlesbares Speichermedium, das ein Programm speichert, um einen Computer zu veranlassen, ein Verfahren auszuführen, wobei das Verfahren aufweist:
Bestimmen, ob eine von einer Mehrzahl an Verarbeitungseinheiten (10#0, 10#1), die Softwarebestandteile ausführen, die jeweils einen Prioritätsgrad aufweisen, eine Störung aufweist; und
wenn bestimmt wird, dass eine der Verarbeitungseinheiten eine Störung aufweist, Verarbeiten der Softwarekomponente, die den Prioritätsgrad aufweist, der größer oder gleich einem Referenzgrad, von den Softwarekomponenten, die von der Verarbeitungseinheit ausgeführt werden sollen, von der bestimmt wurde, dass sie eine Störung aufweist, unter Verwendung der Verarbeitungseinheit, von der nicht bestimmt wurde, dass sie eine Störung aufweist.

## Revendications

1. Dispositif de traitement d'informations comportant :
une pluralité d'unités de traitement (10#0, 10#1) configurée pour exécuter des composants logiciels présentant chacun un niveau de priorité ;
une unité de détermination d'anomalie (30) configurée pour déterminer si l'une quelconque de la pluralité d'unités de traitement (10#0, 10#1) présente une anomalie ; et
une unité de changement (11#0, 11#1) configurée pour, lorsque l'unité de détermination d'anomalie (30) a déterminé que l'une quelconque des unités de traitement présente une anomalie, exécuter un contrôle de sorte que l'unité de traitement non déterminée comme présentant une anomalie traite les composants logiciels supposés être exécutés par l'unité de traitement déterminée comme présentant une anomalie, l'unité de changement (11#0, 11#1) étant configurée pour traiter le composant logiciel présentant le niveau de priorité plus élevé que ou égal à un niveau de référence parmi les composants logiciels supposés être exécutés par l'unité de traitement déterminée comme présentant une anomalie.

2. Dispositif de traitement d'informations selon la revendication 1, comportant en outre :
une unité de stockage non volatile (40) configurée pour conserver des informations, qui sont chargées par la pluralité d'unités de traitement (10#0, 10#1) au moment du démarrage et comprennent une information d'anomalie qui permet à l'unité de traitement, déterminée comme présentant une anomalie par l'unité de détermination d'anomalie (30), d'être identifiée et une information de protection de mémoire qui définit les zones de mémoire qui sont respectivement utilisées par la pluralité d'unités de traitement (10#0, 10#1), dans lequel
lorsque l'unité de détermination d'anomalie (30) a déterminé que l'une quelconque des unités de traitement présente une anomalie, l'unité de changement (11#0, 11#1) est configurée pour réécrire l'information d'anomalie en fonction du résultat de détermination, et est configurée pour réécrire l'information de protection de mémoire de sorte que la zone de mémoire correspondant au composant logiciel présentant le niveau de priorité plus élevé ou égal au niveau de référence parmi les composants logiciels supposés être exécutés par l'unité de traitement, déterminée comme présentant une anomalie, est assignée à l'unité de traitement qui traite le composant logiciel supposé être exécuté par l'unité de traitement, déterminée comme présentant une anomalie.

3. Dispositif de traitement d'informations selon la revendication 2, dans lequel
l'unité de changement (11#0, 11#1) est comprise dans chacune des unités de traitement, et l'unité de détermination de l'anomalie (30) est configurée pour, lorsque l'unité de détermination d'anomalie (30) a déterminé que l'une quelconque des unités de traitement présente une anomalie, délivrer une notification que l'une quelconque des unités de traitement présente une anomalie à l'unité de changement (11#0, 11#1) de l'unité de traitement ne présentant aucune anomalie.

4. Dispositif de traitement d'informations selon la revendication 2, dans lequel
l'unité de changement (11#0, 11#1) est comprise dans l'unité de détermination d'anomalie (30), et l'unité de détermination d'anomalie (30) est configurée pour, lorsque l'unité de détermination d'anomalie (30) a déterminé que l'une quelconque des unités de traitement présente une anomalie, réécrire l'information d'anomalie et l'information de protection de mémoire.

5. Dispositif de traitement d'informations selon l'une quelconque des revendications 2 à 4, dans lequel
lorsque l'unité de détermination d'anomalie (30) a déterminé que l'une quelconque des unités de traitement présente une anomalie, le dispositif de traitement d'information est configuré pour être redémarré après que l'unité de changement (11#0, 11#1) a réécrit l'information d'anomalie et l'information de protection de mémoire.

6. Dispositif de traitement d'informations selon l'une quelconque des revendications 1 à 5, dans lequel
le composant logiciel présentant le niveau de priorité plus élevé que ou égal au niveau de référence comprend un composant logiciel prédéterminé qui est partagé parmi la pluralité d'unités de traitement (10#0, 10#1).

7. Procédé de traitement d'informations comportant :
la détermination si l'une quelconque d'une pluralité d'unités de traitement (10#0, 10#1), qui exécutent les composants logiciels présentant chacun un niveau de priorité, présente une anomalie ; et
lorsqu'il est déterminé que l'une quelconque des unités de traitement présente une anomalie, le traitement de le composant logiciel présentant le niveau de priorité plus élevé que ou égal à un niveau de référence parmi les composants logiciels supposés être exécutés par l'unité de traitement déterminée comme présentant une anomalie grâce à l'utilisation de l'unité de traitement non déterminée comme présentant une anomalie.

8. Support de stockage pouvant être lu par un ordinateur non transitoire mémorisant un programme pour amener un ordinateur à exécuter un procédé, le procédé comportant :
la détermination si l'une quelconque d'une pluralité d'unités de traitement (10#0, 10#1), qui exécutent les composants logiciels présentant chacun un niveau de priorité, présente une anomalie ; et
lorsqu'il est déterminé que l'une quelconque des unités de traitement présente une anomalie, le traitement de le composant logiciel présentant le niveau de priorité plus élevé que ou égal à un niveau de référence parmi les composants logiciels supposés être exécutés par l'unité de traitement déterminée comme présentant une anomalie grâce à l'utilisation de l'unité de traitement non déterminée comme présentant une anomalie.
